# EUROPEAN PATENT SPECIFICATION

(11) **EP 2 279 935 B1**
(45) Date of publication and mention of the grant of the patent: **18.04.2012**
(21) Application number: 09166764.2
(22) Date of filing: 29.07.2009
(51) Int. Cl.: B62J 15/00

(54) **Wing-shaped bicycle fender**
Flügelförmiges Fahrradschutzblech
Garde-boue de bicyclette en forme d'aile

(43) Date of publication of application: 02.02.2011
(73) Proprietor: Sunnywheel Industrial Co. Ltd., Changhua County 504 (TW)
(72) Inventor: Lin, Chong-Jiang, 436, Taichung County (TW)
(74) Representative: Lang, Christian

(56) References cited:
- US-A- 741 997
- US-B1- 6 367 832

## Description

### BACKGROUND OF THE INVENTION

### Field of the Invention

The present invention relates to a bicycle fender, and more particularly to a double wing bicycle fender, wherein the fender main body can be rolled up on a shaft or can stretch out at both sides of the shaft to increase the effective width of the fender, which not only saves space but is also aesthetically pleasing.

### Description of the Prior Art

A bicycle fender is mounted above the wheels of a bicycle to protect rider from mud, dust and road debris. Most of the existing types of the bicycle fenders are arc-shaped, and this arc-shaped type of bicycle fender is only as wide as the width of the wheels as long as it can cover the wheels. However, the fender will be too narrow to fully block the splashing of water or mud when riding through mud or puddles.

US 6,367,832 B1 discloses a retractable bike fender and housing assembly. The bike fender comprises a housing arranged at the frame of a bicycle and an extendable flexible fender element with light affixed to a distal end of the fender.

US 741,997 A describes a mud guard for bicycles containing a cylindrical case with a drum, a metallic ribbon wound around the drum and a frame for fixing the outer end of the metallic ribbon which is to be extended out of the case when using the mud guard.

Those fenders described above can be in a position, in which the extendable fender element is within the housing, or in a second position, the fully extended position. Starting from this state of the art it is the object of the present invention to provide a fender which can be adapted in size to optimize the protection of the user from mud and water.

The present invention has arisen to mitigate and/or obviate the afore-described disadvantages.

### SUMMARY OF THE INVENTION

The primary object of the present invention is to provide a double wing bicycle fender, wherein the fender main body can be rolled up on a shaft or can stretch out at both sides of the shaft to increase the effective width of the fender, which not only saves space but is aesthetically pleasing.

The objects of the present invention are solved by the double wing bicycle fender according to claim 1. Advantageous improvements of the double wing bicycle fender are described by dependent claims.

To achieve the above object, a double wing bicycle fender in accordance with the present invention comprises: a mounting member, a pivoting end cap, a directional assembly, a holding body and a fender main body. The mounting member is a laminate structure and mounted on a bicycle. The pivoting end cap has one end pivoted to the mounting member and the other end is defined with a pivoting portion. The directional assembly includes a directional seat and two movable members, the directional seat is placed into the pivoting portion of the pivoting end cap and includes at least one directional portion, the movable member is pivotally disposed in the pivoting portion of the pivoting end cap and is provided with a plurality of positioning angles and a connecting portion, the positioning angles of the movable members are engaged with the directional portion of the directional seat. The pivoting end cap is disposed at one end of the holding body. The fender main body includes a shaft and at least one wing with one end fixed to and rolled up on the shaft, the shaft is pivotally inserted in the holding body, and the other end of the wing extends out of a lateral side of the holding body and is connected to the connecting portion of the movable member.

### BRIEF DESCRIPTION OF THE DRAWINGS

Fig. 1 is an exploded view of a double wing bicycle fender in accordance with the present invention;
Fig. 2 is an assembly view showing a stretched-out state of the double wing bicycle fender in accordance with the present invention;
Fig. 3 is a perspective view showing the stretched-out state of the double wing bicycle fender in accordance with the present invention;

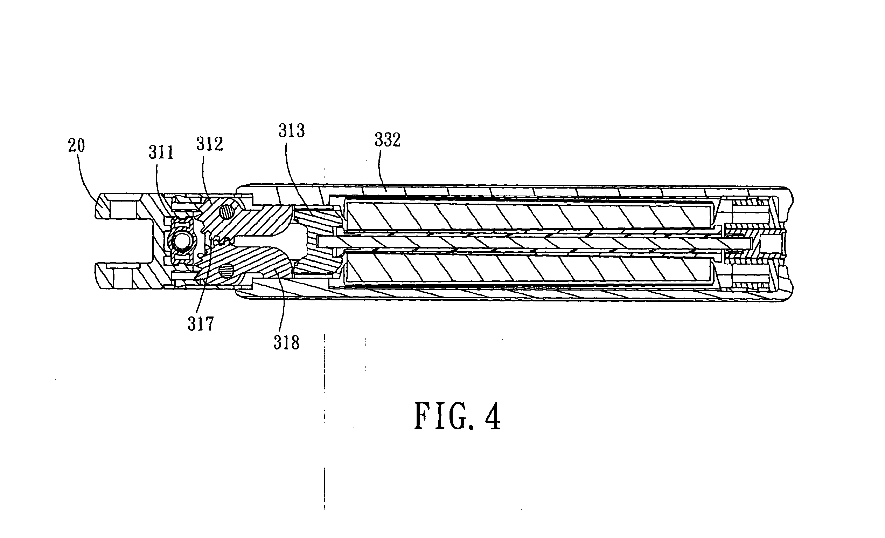

Fig. 4 is a cross sectional view showing a rolled-up state of the double wing bicycle fender in accordance with the present invention;
Fig. 5A is a first illustrative view showing the angle between the two movable members corresponding to the rolled-up state of the double wing bicycle fender in accordance with the present invention;
Fig. 5B is a second illustrative view showing the angle between the two movable members corresponding to a half stretched-out state of the double wing bicycle fender in accordance with the present invention;
Fig. 5C is a third illustrative view showing the angle between the two movable members corresponding to the fully stretched-out state of the double wing bicycle fender in accordance with the present invention; and
Fig. 6 shows that the double wing bicycle fender in accordance with the present invention is mounted on the frame pipe of a bicycle.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

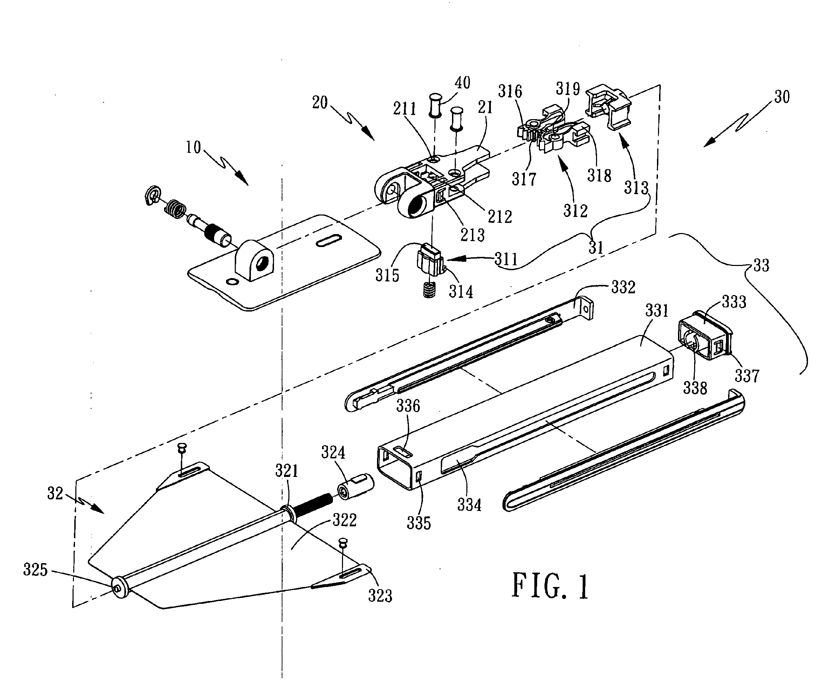

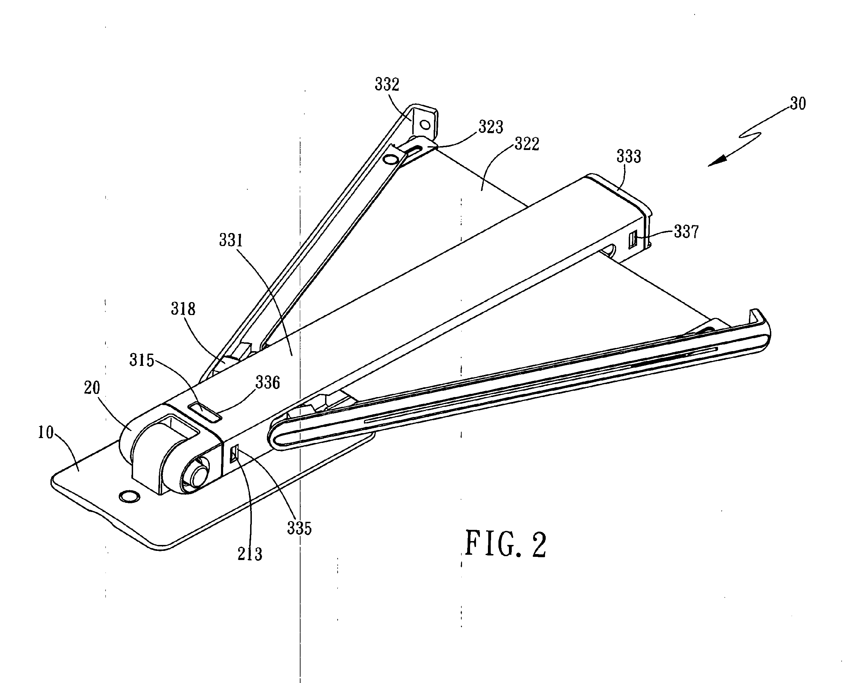

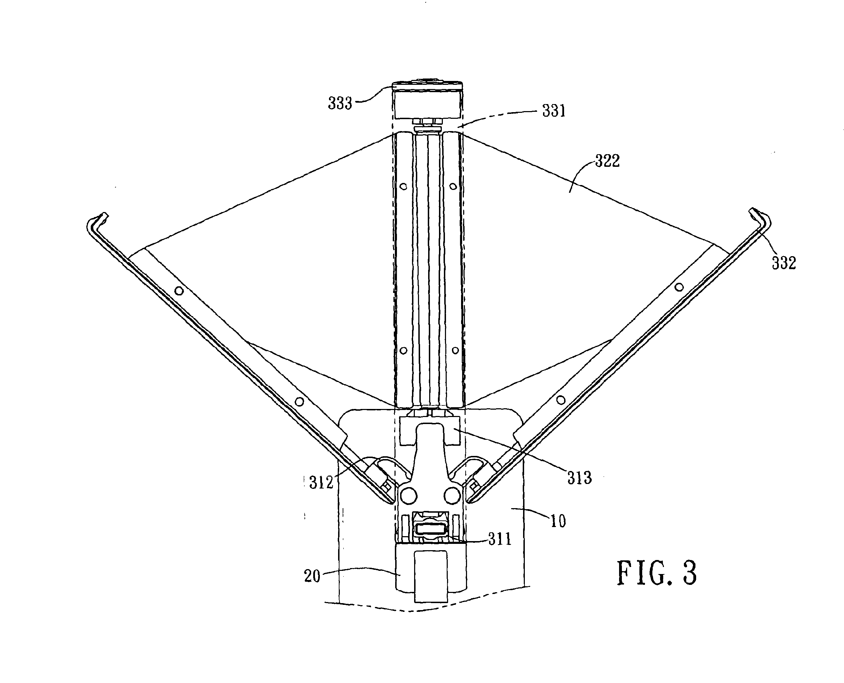

Referring to Figs. 1-3, a double wing bicycle fender in accordance with the present invention is mounted on a bicycle having a plurality of frame pipes and comprises: a mounting member 10, a pivoting end cap 20, and a fender assembly 30.

The mounting member 10 is a laminate structure which is foldable and deformable and mounted on one of the frame pipes.

The pivoting end cap 20 has one end pivoted to the mounting member 10 and the other end defined with a pivoting portion 21 which includes two opposite sheet portions. At both sides of each of the two opposite sheet portions of the pivoting portion 21 two assembling holes 211 are defined, and these assembling holes 211 are aligned in pairs. One of the sheet portions of the pivoting portion 21 is defined with a directional-seat hole 212, and each of two opposite lateral sides of the pivoting end cap 20 is formed as an engaging protrusion 213.

The fender assembly 30 includes a directional assembly 31, a fender main body 32 and a fender-holding assembly 33. The fender main body 32 is received in the fender-holding assembly 33 and connected to the pivoting end cap 20 via the directional assembly 31.

The directional assembly 31 includes a directional seat 311, two movable members 312 and a positioning seat 313. The directional seat 311 is placed into the pivoting end cap 20 via the directional-seat hole 212 and includes two directional portions 314 and a positioning protrusion 315 which protrudes out of the directional-seat hole 212. The two movable members 312 are pivotally disposed between the two sheet portions of the pivoting portion 21 of the pivoting end cap 20 and each are provided with a plurality of positioning angles 316, teeth 317 and a connecting portion 318. The two movable members 312 are engaged with each other via the teeth 317, while the positioning angles 316 of the two movable members 312 are engaged with the two directional portions 314 of the directional seat 311. Each of the two movable members 312 is defined with an assembling hole 319 aligned with the assembling holes 211 of the pivoting portion 21 of the pivoting end cap 20, so that the movable members 312 are pivoted to the pivoting end cap 20 by rivets 40 inserted in the assembling holes 319, 211. The positioning seat 313 is disposed at the other end of the mounting member 10.

The fender main body 32 includes a shaft 321, two wings 322, two trim strips 323 and a positioning member 324. The shaft 321 has one end formed with a protruding shaft portion 325 which is pivotally connected to the positioning seat 313 by being inserted therein and the other end is pivoted to the positioning member 324. Each of the wings 322 has one end fixed to and rolled up around the shaft 321, and the trim strips 323 are fixed to the other end of the wings 322, respectively.

The fender-holding assembly 33 includes a holding body 331, two plates 332 and a cover 333. Both lateral surfaces of the holding body 331 are defined with a plate-receiving slot 334 and two engaging holes 335 at both ends thereof respectively. In a top surface of the holding body 331 neighboring to the plate-receiving slots 334 a directional-seat positioning hole 336 is formed. The pivoting end cap 20 is disposed at one end of the holding body 331 where the directional-seat positioning hole 336 is located, and the directional assembly 31 and the fender main body 32 are received in the holding body 331 in such a manner that the engaging protrusions 213 of the pivoting end cap 20 are engaged in the engaging holes 335 of the holding body 331, and the positioning protrusion 315 of the directional seat 311 protrudes out of the directional-seat positioning hole 336. The cover 333 is provided with two opposite protrusions 337 and a positioning-member receiving cavity 338 and is mounted to the other end of the holding body 331 in such a manner that the protrusions 337 are engaged in the engaging holes 335 of the holding body 331. The two wings 322 of the fender main body 32 extend out of the plate-receiving slots 334 of the holding body 331 and are connected to one end of the respective plates 332, and the connecting portion 318 of the movable members 312 of the directional assembly 31 is engaged in the other end of the respective plates 332. The positioning member 324 of the fender main body 32 is pivotally connected to the cover 333 by being inserted in the positioning-member receiving cavity 338 therein. The fender main body 32 is positioned by pivotally connecting both ends of the shaft 321 to the positioning seat 313 on the holding body 331 and the cover 333, respectively.

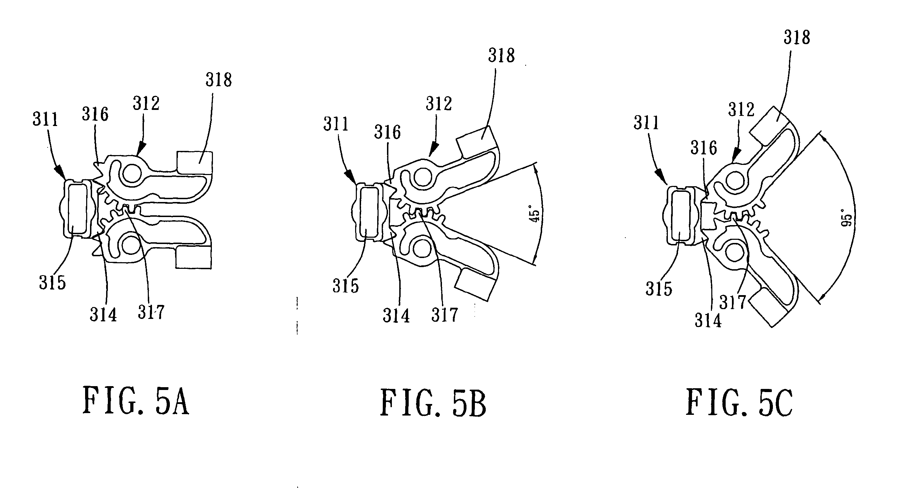

The above description shows that each of the two plates 332 has one end fixed to the trim strips 323 and the other end engaged with the connecting portion 318 of the movable members 312 of the directional assembly 31. Hence, by pulling the end of the each of the plates 332 which is fixed to the trim strips 323, the plates 332 will simultaneously pull the wings 322, so that the wings 322 will be reeled off the shaft 321. When one end of the wings 322 is pulled out, it will cause the motion of the end of the plates 332 which is connected to the movable members 312 and make the movable members 312 to pivot in opposite directions from each other while the teeth 317 of the two movable members 312 are maintained in an engaged state, and the positioning angles 316 are maintained in an engaged relation with respect to the directional portions 314 of the directional seat 311. Hence, the two movable members 312 can be adjusted to have different angles therebetween through pivotal engagement of the teeth 317 and of the positioning angles 316 with the directional portions 314, as shown in Figs. 5A, 5B and 5C, and Fig. 5C shows that the plates 332 are adjusted to the maximum angle. After the plates 332 are pulled out, the two wings 322 of the fender main body 32 will stretch out at both sides of the holding body 331 to protect rider from dust, mud and road debris.

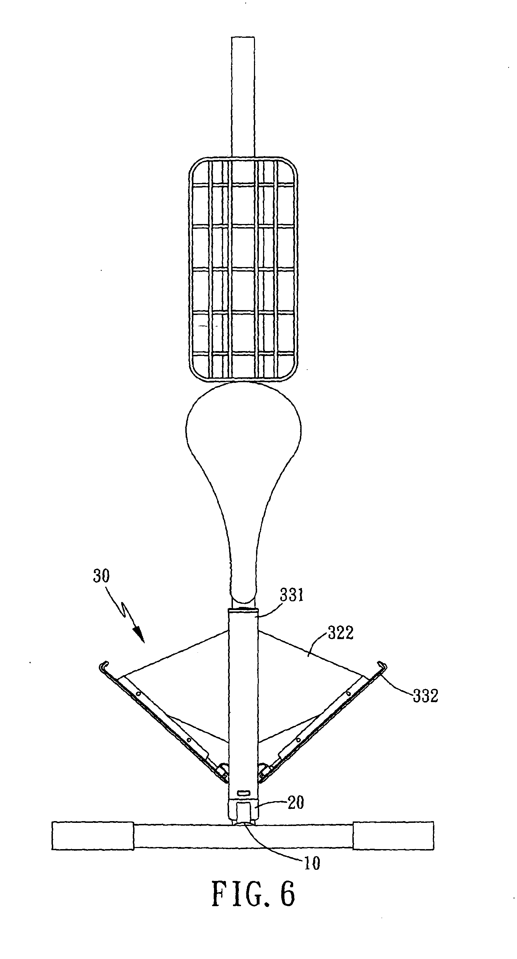

With the mounting member 10, the fender of the present invention can be mounted to one of the pipes of the bicycle frame A. As shown in Fig. 6, the mounting member 10 can be folded or deformed to adapt to the pipes of the bicycle frame and then is fixed thereon by double adhesive tape or hook and loop tape. When the user wants to use the fender main body 32, she/he can pull out the plates 332 of the fender-holding assembly 33 to make the wings 322 stretch out at both sides of the holding body 331 to protect a rider from dust, mud and road debris. Furthermore, when the wings 322 stretch out, the effective width of the fender of the present invention for efficiently keeping off dust and road debris will be much larger than the width of the wheels of the bicycle and determined by the width of the wings 322 and the angle between the two movable members 312 of the directional assembly 31. When the user doesn't want to use the fender main body 32, she/he can push-the plates 332 back to their original positions where the plates 332 cover the plate-receiving slots 334 of the holding body 331, so that the two wings 322 will be rolled up on the shaft 321 of the fender main body 32 again, and the fender main body 32 can be completely received in holding body 331, which not only saves space but is aesthetically pleasing.

While we have shown and described various embodiments in accordance with the present invention, it is clear to those skilled in the art that further embodiments may be made without departing from the scope of the present invention defined by the appended claims.

## Claims

1. A double wing bicycle fender comprising:
a mounting member (10) being a laminate structure;
a pivoting end cap (20) with one end pivoted to the mounting member (10) and the other end defined with a pivoting portion (21);
a directional assembly (31) including a directional seat (311) and two movable members (312), the directional seat (311) being placed into the pivoting portion (21) of the pivoting end cap (20) and including at least one directional portion (314), each movable member (312) being pivotally disposed in the pivoting portion (21) of the pivoting end cap (20) and provided with a plurality of positioning angles (316) and a connecting portion (318), the positioning angles (316) of the movable member (312) being engaged with the directional portion (314) of the directional seat (311);
a holding body (331), at one end of which the pivoting end cap (20) is disposed; and
a fender main body (32) including a shaft (321) and two wings with one end fixed to and rolled up on the shaft (321), the shaft (321) being pivotally inserted in the holding body (331), and the other end of the wing extending out of a lateral side of the holding body (331) and being connected to the connecting portion (318) of the movable member (312) ;
each movable members (312) being provided with a plurality of teeth (317), and the two movable members (312) being engaged with each other via the teeth (317);
two plates (332) each of which has one end fixed to two trim strips (323) and the other end engaged with the connecting portion (318) of the movable members (312), wherein the fender main body (32) includes two wings (322) and the two strips (323), each of the wings (322) has one end fixed to and rolled up around the shaft (321), and the two trim strips (323) are fixed to the other end of the wings (322), respectively.

2. The double wing bicycle fender as claimed in claim 1, wherein the pivoting portion (21) of the pivoting end cap (20) includes two opposite sheet portions, at both sides of each of the two opposite sheet portions of the pivoting portion (21) are defined two assembling holes (211), and these assembling holes (211) are aligned in pairs, one of the sheet portions of the pivoting portion (21) is defined with a directional-seat hole (212), the directional seat (311) is placed into the pivoting end cap (20) via the directional-seat hole (212) and includes a positioning protrusion (315) which protrudes out of the directional-seat hole (212), the movable member (312) is defined with an assembling hole (319) aligned with the assembling holes (211) of the pivoting end cap (20), so that the movable member (312) is pivoted to the pivoting end cap (20) by rivets (40) inserted in the assembling holes (319, 211) of the movable member (312) and the pivoting end cap (20).

3. The double wing bicycle fender as claimed in claim 1, wherein each movable member (312) is pivotally disposed between the two sheet portions of the pivoting portion (21).

4. The double wing bicycle fender as claimed in claim 1, wherein the directional assembly (31) includes a positioning seat (313) which is disposed at one end of the mounting member (10), the shaft (321) has one end formed with a protruding shaft portion (325) which is pivotally connected to the positioning seat (313) by being inserted therein, and the fender main body (32) further includes a positioning member (324) which is pivoted to the other end of the shaft (321).

5. The double wing bicycle fender as claimed in claim 1, wherein the pivoting end cap (20) is disposed at one end of the holding body (331), the directional assembly (31) and the fender main body (32) are received in the holding body (331), the holding body (331) includes a cover (333) which is mounted to the other end of the holding body (331), and at both ends of both lateral surfaces of the holding body (331) are defined two engaging holes (335) for engaging with engaging protrusions (213) of the pivoting end cap (20) and protrusions of the cover (333).

6. The double wing bicycle fender as claimed in claim 1, wherein both lateral surfaces of the holding body (331) are defined with a plate-receiving slot (334), respectively, the two wings (322) of the fender main body (32) extend out of the plate-receiving slots (334) of the holding body (331).

7. The double wing bicycle fender as claimed in claim 5, wherein the cover (333) is provided with a positioning-member receiving cavity (338) in which the positioning member (324) of the fender main body (32) is received.

8. The double wing bicycle fender as claimed in claim 1, wherein a directional-seat positioning hole (336) is formed in a top surface of the holding body (331) neighboring to the plate-receiving slots (334), the pivoting end cap (20) is disposed at one end of the holding body (331) where the directional-seat positioning hole (336) is located, and the positioning protrusion (315) of the directional seat (311) protrudes out of the directional-seat positioning hole (336).

## Patentansprüche

1. Doppelflügelfahrradschmutzfänger, der umfasst:
ein Befestigungselement (10), das eine laminierte Struktur ist,
eine Drehendkappe (20) mit einem drehbar an dem Befestigungselement (10) befestigten Ende und mit einem anderen Ende, das als Drehbereich (21) vorgesehen ist,
eine gerichtete Anordnung (31), die eine gerichtete Aufnahme (311) und zwei bewegliche Elemente (312) umfasst, wobei die gerichtete Aufnahme (311) im Drehbereich (21) der drehbaren Drehendkappe (20) angeordnet ist und wenigstens ein gerichteten Bereich (314) umfasst, wobei jedes bewegliche Element (312) drehbar in dem Drehbereich (21) der Drehendkappe (20) angeordnet ist und mit einer Vielzahl von Positionswinkeln (316) und einem Verbindungsbereich (318) versehen ist, wobei die Positionswinkel (316) des beweglichen Elements (312) mit dem gerichteten Bereich (314) der gerichteten Aufnahme (311) in Eingriff stehen,
einen Halterungskörper (331), an dessen einem Ende die Drehendkappe (20) angeordnet ist, und
ein Schmutzfängerhauptkörperteil (32), das einen Schaft (321) und zwei Flügel umfasst, deren eines Ende an dem Schaft (321) befestigt ist und daran aufgerollt ist, wobei der Schaft (321) drehbar in den Halterungskörper (31) eingesetzt ist, wobei das andere Ende des Flügels sich aus einer lateralen Seite des Halterungskörpers (331) erstreckt und mit dem Verbindungsbereich (318) des beweglichen Elements (312) verbunden ist,
wobei jedes bewegliche Element (312) mit einer Vielzahl von Zähnen (317) versehen ist und wobei die zwei beweglichen Elemente (312) über die Zähne (317) miteinander in Eingriff stehen,
zwei Platten (332), von denen jede mit einem Ende an zwei Verkleidungsstreifen (323) befestigt ist und das andere Ende im Eingriff mit dem Verbindungsbereich (318) des beweglichen Elements (312) steht, wobei der Schmutzfängerhauptkörper (32) zwei Flügel (322) und die zwei Streifen (323) umfasst, wobei jeder der Flügel (23) ein Ende um den Schaft (321) herum befestigt hat und daran aufgerollt ist und wobei die zwei Verkleidungsstreifen (323) an dem anderen Ende der Flügel (322) jeweils entsprechend befestigt sind.

2. Doppelflügelfahrradschmutzfänger nach Anspruch 1, bei welchem der Drehbereich (21) der Drehendkappe (20) zwei gegenüberliegende Plattenbereiche umfasst, wobei an beiden Seiten von jedem der zwei gegenüberliegenden Plattenbereiche des Drehbereichs (21) zwei Montagelöcher (211) vorgesehen sind, wobei diese Montagelöcher (211) in Paaren ausgerichtet sind, wobei in einem der Plattenbereiche des Drehbereichs (21) ein gerichtetes Aufnahmeloch (212) vorgesehen ist, wobei die gerichtete Aufnahme (311) in die Drehendkappe (20) durch das gerichtete Aufnahmeloch (212) eingesetzt wird und einen Positioniervorsprung (315) umfasst, welcher aus dem gerichteten Aufnahmeloch (212) hervor steht, wobei das bewegliche Element (312) mit einem Montageloch (319) versehen ist, welches auf die Montagelöcher (211) der Drehendkappe (20) ausgerichtet ist, so dass das bewegliche Element (312) um Nieten (40), die in die Montagelöcher (319, 211) des beweglichen Elements (312) und der Drehendkappe (20) eingesetzt sind, zu der Drehendkappe (20) gedreht wird.

3. Doppelflügelfahrradschmutzfänger nach Anspruch 1, bei welchem jedes bewegliche Element (312) drehbar zwischen den Plattenbereichen des Drehbereichs (21) angeordnet ist.

4. Doppelflügelfahrradschmutzfänger nach Anspruch 1, bei welchem die gerichtete Anordnung (31) eine Positionieraufnahme (313) umfasst, die an einem Ende des Befestigungselements (10) angeordnet ist, wobei der Schaft (321) ein Ende aufweist, das mit einem vorstehenden Schaftbereich (325) ausgebildet ist, welcher drehbar mit der Positionieraufnahme (313) durch Einsetzen in derselben verbunden ist und wobei der Schmutzfängerhauptkörper (32) ferner ein Positionierelement (324) umfasst, welches zum anderen Ende des Schaftes (321) gedreht ist.

5. Doppelflügelfahrradschmutzfänger nach Anspruch 1, bei welchem die Drehendkappe (20) an einem Ende des Halterungskörpers (331) angeordnet ist, wobei die gerichtete Anordnung (31) und der Schmutzfängerhauptkörper (32) in dem Halterungskörper (331) aufgenommen sind, wobei der Halterungskörper (331) eine Abdeckung (333) umfasst, welche an dem anderen Ende des Halterungskörpers (331) angebracht ist, und wobei an beiden Enden der beiden lateralen Flächen des Halterungskörpers (31) zwei verschiedene Eingriffslöcher (353) zum Eingriff mit den Eingriffsvorsprüngen (213) der Drehendkappe (20) und Vorsprüngen der Abdeckung (333) vorgesehen sind.

6. Doppelflügelfahrradschmutzfänger nach Anspruch 1, bei welchem beide lateralen Flächen des Halterungskörpers (331) jeweils mit einem Plattenaufnahmeschlitz (334) versehen sind, wobei die zwei Flügel (322) des Schmutzfängerhauptkörpers (32) sich aus den Plattenaufnahmeschlitzen (334) des Halterungskörpers (331) erstrecken.

7. Doppelflügelfahrradschmutzfänger nach Anspruch 5, bei welchem die Abdeckung (333) mit einer Positionierelement-Aufnahmeausnehmung (338) versehen ist, in welcher die Positionierelemente (324) des Schmutzfängerhauptkörpers (32) aufgenommen sind.

8. Doppelflügelfahrradschmutzfänger nach Anspruch 1, bei welchem ein gerichtetes Aufnahmepositionierloch (336) in einer oberen Oberfläche des Halterungskörpers (331) benachbart zu den Plattenaufnahmeschlitzen (334) ausgebildet ist, wobei die Drehendkappe (20) an dem Ende des Halterungskörpers (331) angeordnet ist, wo das gerichtete Aufnahmepositionierloch (336) angeordnet ist, und wobei die Positioniervorsprünge (315) der gerichteten Aufnahme (311) aus dem gerichteten Aufnahmepositionierloch (336) hervorstehen.

## Revendications

1. Garde-boue de bicyclette à double aile comprenant :
un élément de montage (10) étant une structure laminée,
un capuchon d'extrémité pivotant (20) avec une extrémité pivotée vers l'élément de montage (10) et l'autre extrémité définie avec une portion pivotante (21),
un ensemble directionnel (31) comprenant un siège directionnel (311) et deux organes mobiles (312), le siège directionnel (311) étant placé dans la portion pivotante (21) du capuchon d'extrémité pivotant (20) et comprenant au moins une portion directionnelle (314), chaque organe mobile (312) étant disposé pivotant dans la portion pivotante (21) du capuchon d'extrémité pivotant (20) et
étant pourvu d'une pluralité d'angles de positionnement (316) et d'une portion de connexion (318), les angles de positionnement (316) de l'organe mobile (312) étant en prise avec la portion directionnelle (314) du siège directionnel (311),
un corps de support (331) à l'une extrémité duquel le capuchon d'extrémité pivotant (20) est disposé et
un corps principal de garde-boue (32) comprenant une tige (321) et deux ailes avec une extrémité fixée à et enroulée sur la tige (321), la tige (321) étant insérée pivotante dans le corps de support (331) et l'autre extrémité de l'aile s'étendant à l'extérieur d'un côté latéral du corps de support (331) et étant reliée à la portion de connexion (318) de l'organe mobile (312),
chaque organe mobile (312) étant pourvu d'une pluralité de dents (317) et les deux organes mobiles (312) étant en prise l'un avec l'autre par l'intermédiaire des dents (317),
deux plaques (332), chacune ayant une extrémité fixée à deux bandes décoratives (323) et l'autre extrémité en prise avec la portion de connexion (318) des organes mobiles (312), le corps principal de garde-boue (32) comprenant deux ailes (322) et les deux bandes décoratives (323), chacune des ailes (322) ayant une extrémité fixée à et enroulée autour de la tige (321) et les deux bandes décoratives (323) étant fixées à l'autre extrémité des ailes (322) respectivement.

2. Garde-boue de bicyclette à double aile selon la revendication 1 dans lequel la portion pivotante (21) du capuchon d'extrémité pivotant (20) comprend deux portions de tôle opposées, deux trous de montage (211) sont définis sur les deux côtés de chacune des deux portions de tôle opposées de la portion pivotante (21) et ces trous de montage (211) sont alignés en paires, l'une des portions de tôle de la portion pivotante (21) est définie avec un trou de siège directionnel (212), le siège directionnel (311) est placé dans le capuchon d'extrémité pivotant (20) par l'intermédiaire du trou de siège directionnel (212) et comprend une saillie de positionnement (315) qui fait saillie hors du trou de siège directionnel (212), l'organe mobile (312) est défini avec un trou de montage (319) aligné avec les trous de montage (211) du capuchon d'extrémité pivotant (20) par des rivets (40) insérés dans les trous de montage (319, 211) de l'organe mobile (312) et du capuchon d'extrémité pivotant (20).

3. Garde-boue de bicyclette à double aile selon la revendication 1 dans lequel chaque organe mobile (312) est disposé pivotant entre les deux portions de tôle de la portion pivotante (21).

4. Garde-boue de bicyclette à double aile selon la revendication 1 dans lequel l'ensemble directionnel (31) comprend un siège de positionnement (313) qui est disposé à une extrémité de l'élément de montage (10), la tige (321) a une extrémité formée avec une portion de tige en saillie (325) qui est reliée en pivotement au siège de positionnement (313) en y étant inséré et le corps principal de garde-boue (32) comprend de plus un élément de positionnement (324) qui est pivoté vers l'autre extrémité de la tige (321).

5. Garde-boue de bicyclette à double aile selon la revendication 1 dans lequel le capuchon d'extrémité pivotant (20) est disposé à une extrémité du corps de support (331), l'ensemble directionnel (31) et le corps principal de garde-boue (32) sont logés dans le corps de support (331), le corps de support (331) comprend un couvercle (333) qui est monté à l'autre extrémité du corps de support (331), et deux trous d'enclenchement (335) sont disposés aux deux extrémités des deux surfaces latérales du corps de support (331) pour être en prise avec des saillies d'enclenchement (213) du capuchon d'extrémité pivotant (20) et des saillies du couvercle (333).

6. Garde-boue de bicyclette à double aile selon la revendication 1 dans lequel les deux surfaces latérales du corps de support (331) sont définies chacune avec une fente de logement de plaque (334), les deux ailes (322) du corps principal de garde-boue (32) s'étendent hors des fentes de logement de plaque (334) du corps de support (331).

7. Garde-boue de bicyclette à double aile selon la revendication 5 dans lequel le couvercle (333) est pourvu d'une cavité de logement de l'élément de positionnement (338) dans laquelle l'élément de positionnement (324) du corps principal de garde-boue (32) est logé.

8. Garde-boue de bicyclette à double aile selon la revendication 1 dans lequel un trou de positionnement de siège directionnel (336) est formé dans une surface de dessus du corps de support (331) au voisinage des fentes de logement de plaque (334), le capuchon d'extrémité pivotant (20) est disposé à une extrémité du corps de support (331) où le trou de positionnement de siège directionnel (336) est situé et la saillie de positionnement (315) du siège directionnel (311) fait saillie hors du trou de positionnement de siège directionnel (336).
